# EUROPEAN PATENT SPECIFICATION

(11) **EP 1 232 532 B1**
(45) Date of publication and mention of the grant of the patent: **31.05.2006**
(21) Application number: 00993140.3
(22) Date of filing: 22.11.2000
(51) Int. Cl.: H01M 6/06, H01M 10/04, H01M 10/28, H01M 4/02

(54) **ELECTROCHEMICAL CELL CONSTRUCTIONS AND METHODS OF MAKING THE SAME**
ELEKTROCHEMISCHE ZELLENKONSTRUKTIONEN UND VERFAHREN ZU DEREN HERSTELLUNG
CONSTRUCTIONS DE CELLULES ELECTROCHIMIQUES ET LEUR PROCEDES DE PRODUCTION

(30) Priority: 24.11.1999 US 167534 P
(43) Date of publication of application: 21.08.2002
(73) Proprietor: EVEREADY BATTERY COMPANY, INC., Westlake, Ohio 44145 (US)
(72) Inventor: VANDAYBURG, Mark, D., Westlake, OH 44145 (US); HUGHES, Paula, J., Cleveland Heights, OH 44118 (US); SCHUBERT, Mark, A., Brunswick, OH 44212 (US); TANG, Nghia, C., Olmsted Falls, OH 44138 (US); AYERS, Katherine, E., Westlake, OH 44145 (US); AYERS, Alan, D., Westlake, OH 44145 (US); BAILEY, John, C., Columbia Station, OH 44028 (US); WHITE, Neal Charles, Hexham, Northumberland NE46 3AT (GB)
(74) Representative: Weber, Thomas
(86) International application number: PCT/US2000/032051
(87) International publication number: WO 2001/048836

(56) References cited:
- EP-A- 0 312 330
- DE-C- 55 781
- FR-A- 589 729
- FR-A- 1 211 799
- FR-A- 2 622 359
- GB-A- 150 848
- GB-A- 1 387 073
- US-A- 2 424 149
- US-A- 2 605 298
- US-A- 3 071 638
- US-A- 4 226 920
- US-A- 5 472 806
- US-A- 5 677 080
- US-A- 5 869 205

## Description

This invention relates to the field of electrochemical cells, and more particularly to electrochemical cells having very high anode-to-cathode interfacial surface area and, therefore, high rate discharge efficiency.

Electrochemical cells are commonly employed to supply voltage for electrically operated devices, and particularly for portable electrically operated devices. Popular alkaline cells of the generally cylindrical type are commercially available in industry standard sizes including D-, C-, AA-, AAA-, and AAAA-size cells. There is an increasing demand for alkaline cells, particularly alkaline cells of the commonly commercially available sizes, which exhibit improved discharge efficiency at high discharge rates.

A frequently used configuration for high discharge rate batteries is a spiral wound electrode assembly, also known as a jelly-roll type assembly, in which a positive electrode, a negative electrode, and a separator sheet, are spirally wound to provide a high surface area between the electrodes, whereby a high discharge rate is achievable. The spiral wound construction requires that the electrodes be provided with a separator to avoid shorting. If conventional separators, such as paper or cellulose separators, are used, typically approximately 10% to 20% of the total volume of a AA-size jelly-roll cell with a 110 square centimetre anode-to-cathode surface area is consumed by non-active separator material. The increased interfacial surface area results in increased high rate capacity. However, the reduction in active material volume causes reduced capacity at low rates of discharge. If the current separator could be replaced with a thinner separator, spirally wound electrode configurations and alternative cell constructions could be provided which produce an alkaline cell with.higher interfacial surface area and increased high rate performance.

Another disadvantage with conventional spiral wound cell constructions is that the machines used for spirally winding two electrodes and a separator are relatively expensive to fabricate, operate and maintain. Accordingly, improved methods and cell constructions are desired.

US-A-5,869,205 discloses an electrochemical cell having multiple anode compartments to increase anode-to-cathode interfacial area. One embodiment includes a first electrode disposed in a container, in which the first electrode includes four cylindrically shaped cavities, with a second electrode disposed within each of the four cavities. A conventional separator is disposed within each of the four cavities. While the cell configuration described in US-A-5,869,205 achieves a substantial improvement in high rate capacity, conventional separators are used. Accordingly, the improved discharge efficiency at high discharge rates, which is associated with an increase in anode-cathode interfacial surface area, is also accompanied by a proportional increase in separator area and separator volume. Therefore, improved discharge efficiency at high discharge rates is achieved, at least in part, by sacrificing total capacity. It would be desirable to achieve even greater improvements in discharge efficiency at high discharge rates, and preferably to achieve such improvements without sacrificing total capacity.

US-A-3,156,585 discloses a hermetically sealed storage battery comprising a plurality of concentrically arranged ring-shaped electrodes, each of which is separated from an adjacent electrode by a conventional separator. Although the patent does not specifically mention improved discharge efficiency at high discharge rates, the battery construction shown would be expected to have an increased anode-to-cathode interfacial surface area, and would be expected to exhibit at least some improvement in discharge efficiency at high discharge rates. However, the battery structure is extremely complicated, and would be difficult to manufacture at a competitive price. Any improvement in discharge efficiency at high discharge rates would be accompanied by a significant increase in separator area and volume and, therefore, a significant decrease in total capacity. It would be desirable to provide alkaline cells having increased anode-to-cathode interfacial area, and which are simpler in design and, therefore, less expensive, and which preferably achieve improved discharge efficiency at high discharge rates without sacrificing total capacity.

US Serial No. 09/198,802, filed 24 November 1998 (published as WO-A-00/33397), discloses a high rate electrochemical cell comprising a first electrode of a first polarity disposed in a container, a second electrode of a second polarity disposed on one side of the first electrode, a first current collector disposed in contact with the first electrode, and an outer electrochemically active layer having the second polarity and being disposed on another side of the first electrode. A separator is disposed between the first electrode and the second electrode and between the second electrode and the outer electrochemically active layer. The construction disclosed in US Serial No. 09/198,802 (published as WO-A-00/33397) has the advantage of achieving a substantial increase in anode-to-cathode interfacial surface area; and hence an improvement in discharge efficiency at high discharge, rates, using a relatively simple design which can be produced at a competitive price. However, because the separator between the first and second electrode and between the second electrode and the outer electrochemically active layer is a conventional separator, the improved discharge efficiency at high discharge rates is accompanied with an increase in separator volume, and, therefore, a decrease in total capacity.

EP-A-0 312 330 discloses an alkali metal anode, typically lithium, which may be flat plate like or having ribs or corrugations and whereby the anode is provided with a coating, such as by dip coating or pressure coating. The coating, which may typically include PVC, functions as the separator and the coated anode is surrounded with liquid oxyhalide contained within battery casing.

US-A-2 605 298 discloses the concept of wrapping, spraying or dipping of a separator on zinc anode of a Zn/carbon Leclanche type battery. Similar disclosures are present in US-A-2 424 149, FR-A-1 211 799, GB-A-150 848, GB-A-1 387 073, DE-A-55 781 and FR-A-589 729.

The invention pertains to batteries having high anode-to-cathode interfacial surface area, and improved discharge efficiency at high discharge rates. The invention also provides methods for making batteries having high anode-to-cathode interfacial surface area, and improved discharge efficiency at high discharge rates. The batteries and methods of this invention generally involve the use of a first electrode or electrode material which is provided with a coating that functions as a separator, and the use of a flowable electrode material which flows around and contacts the coated electrode.

Accordingly, in a first aspect, the present invention provides a battery comprising:
a housing;
a first electrode disposed in the housing;
a coating which functions as a separator, the coating located on a surface of the first electrode; and
a flowable second electrode material, the flowable second electrode material disposed in the housing and surrounding the coated surface of the first electrode,
wherein the separator coating has a thickness of less than 100 micrometers.

In a second aspect, the present invention provides a method of making a battery comprising:
providing a housing;
providing a first electrode;
forming on a surface of the first electrode a coating which functions as a separator, and which has a thickness of less than 100 micrometers;
disposing the coated first electrode in the housing; and
disposing a flowable material in the housing, the flowable material including a second electrode material, the flowable material surrounding the separator coated on the surface of the first electrode.

The expression "flowable electrode material" refers to an electrode material having the ability to flow around and completely surround a solid electrode. Such materials generally comprise a mixture of a liquid electrolyte and dispersed solid particles of an electrochemically active material. The flowable electrode may be a low viscosity material such as a liquid or a relatively high viscosity material such as a paste. Alternatively, the flowable electrode may be a powder. This combination of features makes it possible to prepare electrochemical cells having very high anode-to-cathode interfacial surface area and relatively low separator volume. In fact, the principles of this invention can be employed to achieve a substantial increase in anode-to-cathode interfacial area and, therefore, a substantial improvement in discharge efficiency at high discharge rates, as compared with conventional cylindrical alkaline cells having a bobbin type cell construction wherein an anode is disposed within a cylindrical volume centrally formed in a cathode disposed adjacent an inner wall of a steel can defining the electrochemical cell, while maintaining, or even increasing, total cell capacity.

The first electrode includes a coating on surfaces of the first electrode, wherein the coating functions as a separator. The separator coating is a thin film or layer of material which is formed on the surface of the electrode. The coating is at least initially secured to the surface of the electrode by mechanical, chemical or electrical forces. After the cell has been assembled, the coating may no longer remain secured to the electrode surface. In contrast, conventional separator materials are carefully converted into a dry free-standing film prior to placing the separator adjacent the surface of an electrode. Conventional separators conform to the surface of the electrode on a macroscopic scale and thus are not capable of forming uniformly thick layers on the surface of an irregularly shaped electrode. Separator coatings are also distinguished from conventional separator materials by the fact that separator coatings are initially bound to the electrode surface along the entire interfacial area between the separator and electrode. It is not necessary for the separator material to remain bound to the electrode after the cell has been assembled.

Examples of suitable separator coatings include coatings formed by applying a polymeric coating composition to the electrode or electrode material and converting the polymeric coating composition into a polymer film. Such polymeric coating compositions can be prepared by dissolving a polymer, such as cellulose, in a solvent. Suitable separator coatings can also be formed by polymerising the separator coating directly on surfaces of an electrode. A more detailed description of various separator coatings suitable for use with the invention are set forth in US Serial No. 09/410,300 filed 30 September 1999, (now published as WO-A-01/24291).

The separator coatings or films used in this invention have a thickness of less than 100 micrometres, preferably a thickness of less than 60 micrometres, more preferably less than 40 micrometres, and most preferably less than 30 micrometres. Because of the substantial reduction in thickness of the separator coatings used herein, as compared with conventional paper separators (typically having a thickness of at least 200 micrometres), it is possible to substantially increase the anode-to-cathode interfacial surface area while reducing total separator volume. Accordingly, the use of separator coatings having a thickness of less than 100 micrometres, less than 60 micrometres, less than 40 micrometres, or less than 30 micrometres, will allow production of electrochemical cells simultaneously exhibiting improved discharge efficiency at high discharge rates, and increased total discharge capacity. For example, a separator coating having a thickness of 25 micrometres would facilitate production of a AA-size electrochemical cell having about 10 times the anode-to-cathode interfacial surface area of a conventional AA-size battery design using a bobbin type configuration with a 250 micrometre separator, without decreasing total capacity. Alternatively, the thinner separator coatings can be used to make electrochemical cells having a combination of increased anode-to-cathode interfacial surface area, improved discharge efficiency at high discharge rates, and higher total capacity.

In addition to facilitating the production of thinner separators, the use of a separator coating formed directly on the surface of an electrode makes it practical to construct electrochemical cells with electrodes having highly irregular shapes and a high surface area. This is in contrast to conventional paper and cellophane separators which can, in general, only conform with planar and smoothly curved electrode surfaces. More specifically, the inability to conform conventional paper and cellophane separators to irregular surfaces has limited their use to electrochemical cells having plate electrodes, ribbon electrodes and cylindrically shaped electrodes. An attempt to conform conventional paper or cellophane separators to an irregularly shaped electrode will generally cause the separator to become folded upon itself and occupy an unacceptably high portion of the volume of an electrochemical cell, whereas the separator coatings used in this invention can be formed directly on irregularly shaped surfaces of an electrode to achieve a substantially uniformly thin separator which does not occupy an unacceptably large volume in an electrochemical cell.

Another important feature of this invention is the use of a flowable second electrode material which is capable of flowing around and surrounding the surfaces of an irregularly shaped, non-symmetrically shaped and/or non-cylindrically shaped separator coated first electrode. An example of an electrode having a non-symmetrical and a non-cylindrical shape is a spirally wound electrode or a dendritic zinc electrode (which is described later herein). The use of a separator coated electrode in combination with a flowable second electrode material provides an economical way for producing electrochemical cells having a very high anode-to-cathode interfacial surface area and, therefore, an improved discharge efficiency at high discharge rates, without sacrificing total discharge capacity.

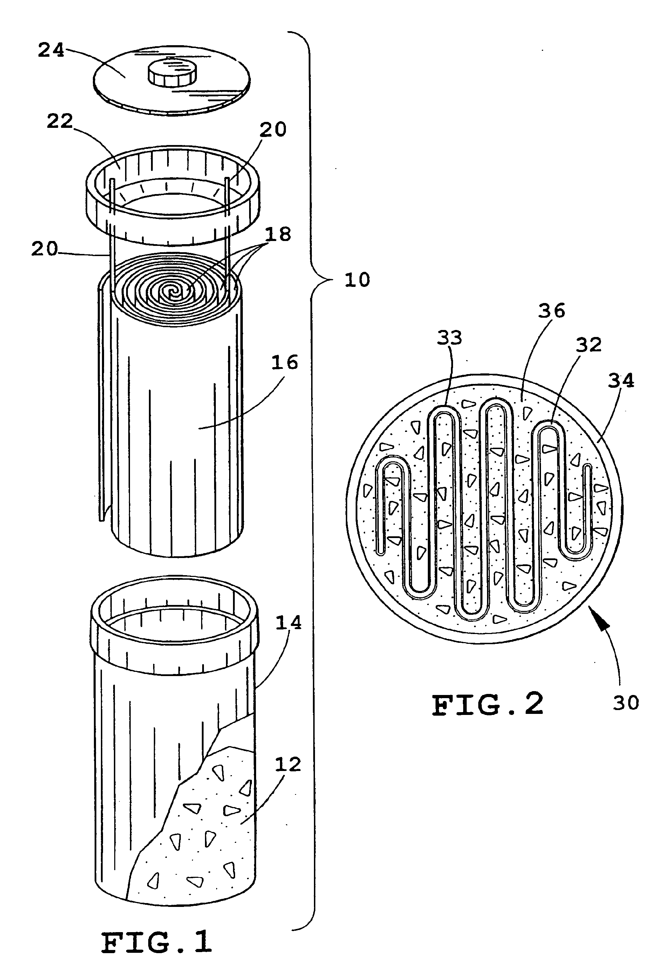

In an embodiment that uses a spirally wound ribbon electrode, for example an electrochemical cell construction as shown in Figure 1, the cell may be constructed by depositing a flowable electrode material into a can or housing, and then inserting a spirally wound, separator coated electrode into the can. As the spirally wound electrode is inserted into the can, the flowable electrode material flows upwardly filling the spaces defined by the spirally wound electrode and preferably completely surrounds the surfaces of the spirally wound electrode. Alternatively, the cell may be made by first inserting the spirally wound electrode into the can, and thereafter depositing electrode material into the can so that it flows around and between the surfaces of the spirally wound electrode and the can. Electrically conductive leads may be attached to the upper end of the spirally wound electrode, either before or after the spirally wound electrode is inserted into the can. The electrochemical cell may be completed in a conventional manner with a seal and a cover.

Preferably, the second electrode material constitutes a positive electrode and the first electrode is a negative electrode. In this case, the first electrode preferably comprises zinc as anode material, preferably in the form of a ribbon such as zinc foil, and the second electrode material preferably includes manganese dioxide as cathode active material. Alternatively, the second electrode is the negative electrode, in which case the flowable material comprises anode active material. A flowable material comprising zinc as anode active material can be comprised of, for example, a mixture of zinc, a binder, potassium hydroxide, water, and optionally, a gelling agent.

Other suitable electrode materials may be chosen according to the desired battery type and cell chemistry. For example, the first electrode or second electrode material may includes at least one electrochemically active material selected from lithium, nickel, metal hydride, cadmium, carbon, graphite, and lithiated manganese dioxide.

An advantage of the present invention, particularly in an embodiment that uses a spirally wound ribbon electrode, for example an electrochemical cell construction as shown in Figure 1, is that it eliminates various problems associated with conventional methods of manufacturing spirally wound or jelly-roll electrochemical cells. Spirally wound electrochemical cells are conventionally produced by winding an anode and cathode together with a first separator disposed between the anode and the cathode. In a conventional process the separator and electrodes must be properly aligned before winding of the electrodes and separator. By forming a separator directly on at least one of the electrodes, in accordance with the present invention, the need for aligning the separator with the electrodes is eliminated, and the need for aligning a first electrode with a second electrode is eliminated. This simplifies battery assembly, and, thereby, reduces the cost of fabricating a spirally wound battery. Equipment for winding a single web is less expensive than equipment for simultaneously winding and aligning three or more webs. The anode is generally a metal foil, and the cathode is generally a composite material comprised of a particulate electrode material and a binder. In order to allow spiral winding of the cathode with the anode, the binder must be flexible. Additionally, conventional machines for winding a cathode and anode together are more expensive than machines used for winding a foil anode alone. Accordingly, the present invention allows an electrochemical cell construction, for example as shown in Figure 1, that eliminates the need for expensive jelly-roll winding machines and eliminates the need for a flexible binder in the cathode material. Thus, cell constructions are enabled that allow spirally wound electrochemical cells to be produced less expensively. Additionally, the separator coatings on each side of the spirally wound ribbon electrode can be thinner and occupy less volume than conventional paper or cellophane separators, thereby facilitating production of spirally wound electrochemical cells having higher anode-to-cathode interfacial surface area and/or increased total capacity.

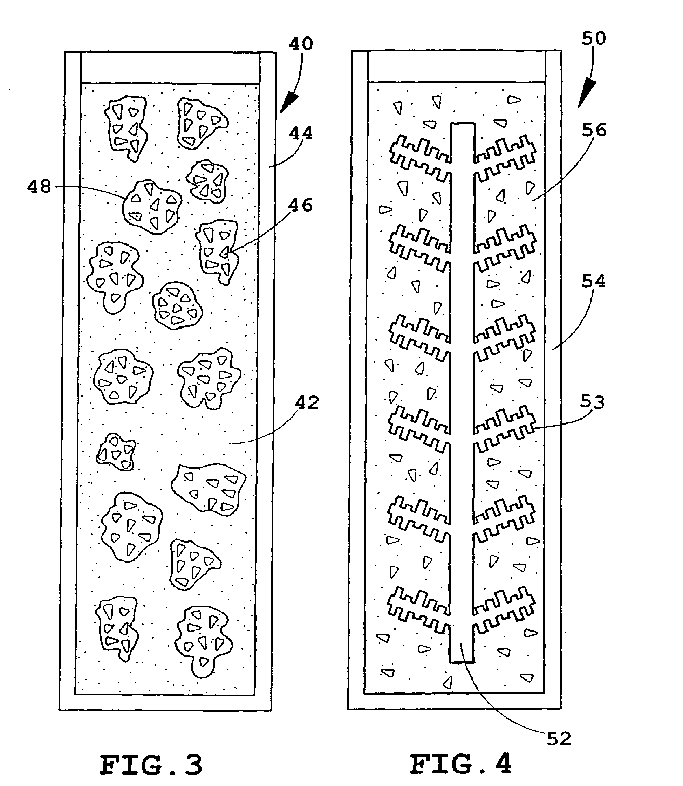

In an alternative embodiment, the cell includes a ribbon electrode having a separator coating and folded in a zigzag fashion, for example an electrochemical cell construction as shown in Figure 2. The folded electrode is inserted into the can and is surrounded by a flowable electrode material. The electrode material may be deposited into the can before or after the separator coated electrode is inserted into the can.

In further alternative embodiments, the first electrode may comprise a porous fixed network of an electrochemically active material, such as zinc, or a porous fixed network of an electrically conductive material, such as brass, on which is deposited an electrochemically active material, such as zinc. Examples, such as metal foams and "dendritic zinc" are described below.

Thus, in one embodiment, the electrochemical cell comprises a separator coated porous metal (such as zinc) electrode inserted in the can, for example an electrochemical cell construction as shown in Figure 3. The porous or reticulated electrode can be a metal foam or sintered metal electrode.

Metal foams may be produced by a variety of known methods. For example, a molten metal may be placed under high pressure so that it dissolves a non-reactive gas. When the pressure is released and the metal is allowed to cool, the dissolved gas escapes and leaves open-celled pores in the metal body. In another process, foaming agents may be added to molten metal. Another process mixes monomers with metal particles and heats the mixture to induce foaming and solidification of the resin. In another process metal particles can be compressed in a conventional manner under suitable conditions of elevated temperature and pressure to form an anode having a desired shape. The temperature and pressure employed are not particularly critical provided complete sintering and coalescence of the particles does not occur. Temperatures at approximately the sintering temperature of the metal at the pressures employed are preferred. Alternatively, the metal particles can be dry mixed with a powdered resinous binder such as polytetrafluoroethylene. The admixture of metal particles and binder may be compressed in a conventional manner, again under suitable conditions of elevated temperature and pressure to form an anode having the desired shape. The temperature depends upon the resin selected and the pressure applied which is normally at from about 1.7 to 170 MPa (250 to 25,000 pounds per square inch).

Another method of fabricating an electrode having an open-pore structure involves depositing a metal by arc vapour deposition on and in an openwork synthetic-resin pyrolyzable support by juxtaposing the support with a pair of electrodes at least one of which is composed of at least one element of the selected metal. The electrodes are advanced into contact to strike an electric arc between the electrodes and evaporate the metal from one of the electrodes and effect deposition of the metal on the support. The space in which the support is juxtaposed with the electrodes is evacuated prior to or during deposition of the metal, whereby a fraction of a total amount of the metal adapted to ultimately form the open-pore structure is deposited in the form of a coating. In a spray-deposition operation, a quantity of the metal sufficient to make up the remainder of the total amount is sprayed onto the support and/or the coating. Thereafter, the support is pyrolyzed to form an openwork skeleton consisting essentially of the metal. In a final step, the metal skeleton is sintered into a coherent body constituting an open-pore structure. Further details of this method are set forth in US-A-5,011,638.

The reticulated or porous metal electrode (e.g., metal foam, sintered metal, etc.) may be provided with a separator coating by any suitable method, for example using any of the techniques set forth in US Serial No. 09/410,300 filed 30 September 1999 (now published as WO-A-01/24291). Thereafter, the separator coated porous electrode is inserted into the can and surrounded by flowable electrode material which flows around and into the pores of porous the electrode. Alternatively, the porous electrode may be inserted into the can before being provided with the separator coating. The flowable material may be added to the can before and/or after the porous electrode has been inserted.

In accordance with another embodiment, for example as shown an Figure 4, the electrochemical cell includes a three-dimensional tree-like structure of a metal, such as a material known as "dendritic zinc", which resembles the veins of a leaf, and which is coated with the separator coating. The electrode which has the separator coating is immersed in a can containing the flowable cathode material, for example a slurry of a cathode mix. Alternatively, the flowable material is added after the electrode has been inserted. Suitable methods for preparing dendritic zinc electrodes are disclosed in US-A-3,071,638 and US-A-3;753,779.

In a preferred embodiment of the first aspect, a battery is provided that comprises:
a housing having an interior wall;
a first electrode disposed in the housing, the first electrode coated with a separator material; and
a flowable mixture of a second electrode material and an electrolyte dispensed in the housing such that the flowable mixture flows around the coated first electrode and between the first electrode and the interior wall of the housing.

According to this preferred embodiment, preferably the first electrode includes at least one strip including an electrically active material, preferably a zinc ribbon. The strip may, for example, be spirally wound or folded in a zigzag pattern. Alternatively, the first electrode may comprise a porous fixed network of an electrochemically active material such as zinc, or may comprise a porous fixed network of an electrically conductive material on which is deposited an electrochemically active material such as zinc. The battery may comprise one first electrode or a plurality of first electrodes, each coated with a separator material, and each disposed into the housing such that the flowable mixture flows around the coated first electrodes and between the first electrodes and the interior wall of the housing. Preferred is that the second electrode material constitutes a positive electrode and the first electrode a negative electrode. For example, the second electrode material may include manganese dioxide, and the first electrode preferably includes zinc. However, alternatively one of the first electrode and second electrode material may include lithium, nickel, metal hydride, cadmium, carbon, graphite and/or lithiated manganese dioxide.

In another preferred embodiment of the first aspect, a battery is provided that comprises:
a housing;
a formed negative electrode disposed in the housing, the formed negative electrode including zinc, and the formed negative electrode coated with the separator as described above; and
a flowable mixture of an electrolyte and a positive electrode including manganese dioxide dispensed within the housing such that the flowable mixture surrounds the negative electrode.

In a preferred embodiment of the second aspect, a method of making a battery is provided that comprises the steps of:
dispensing a flowable electrode material in a housing;
forming an electrode having a fixed structure;
coating the electrode having a fixed structure with the separator material as described above; and
immersing the coated electrode in the flowable electrode material within the housing.

The present invention will be further understood by reference to the embodiments shown in the drawings, in which:
Figure 1 is an exploded perspective view of a spirally wound electrochemical cell in accordance with the invention;
Figure 2 is a schematic cross-sectional view of an electrochemical cell having a ribbon electrode folded in a zigzag pattern in accordance with the invention;
Figure 3 is a schematic longitudinal cross-sectional view of an electrochemical cell having a porous metal electrode in accordance with the invention; and
Figure 4 is a schematic longitudinal cross-sectional view of an electrochemical cell including an electrode having a three-dimensional fractal structure in accordance with the invention.

Thus, an embodiment of the invention is shown in Figure 1. In accordance with this embodiment, an electrochemical cell 10 is constructed by depositing a flowable electrode material 12 into a can or housing 14 and inserting a spirally wound, separator coated electrode 16 into can 14. As spirally wound electrode 16 is inserted into can 14, flowable electrode material 12 flows upwardly filling spaces 18 defined by spirally wound electrode 16 and completely surrounds the surfaces of spirally wound electrode 16. As an alternative, electrochemical cell 10 can be made by first inserting the spirally wound electrode 16 into can 14, and thereafter depositing electrode material 12 into can 14 so that it flows around and between the surfaces of electrode 16 and can 14. Electrically conductive leads 20 may be attached to the upper end of spirally wound electrode 16 either before or after spirally wound electrode 16 is inserted into can 14. Electrochemical cell 10 is completed in a conventional manner with a seal 22 and a cover 24.

An alternative embodiment of the invention is shown in Figure 2. In accordance with this embodiment, an electrochemical cell 30 includes a ribbon electrode 32 having a separator coating 33 folded in a zigzag fashion. Folded electrode 32 is inserted into can 34 and is surrounded by a flowable electrode material 36. Electrode material 36 may be deposited into can 34 before or after separator coated electrode 32 is inserted into can 34.

A further alternative embodiment of the invention is shown in Figure 3. In accordance with this embodiment, an electrochemical cell 40 comprises a separator coated porous metal (such as zinc) electrode 42 inserted in can 44. Porous or reticulated electrode 42 can be a metal foam or sintered metal electrode. The reticulated or porous metal electrode is provided with a separator coating. Thereafter, separator coated porous electrode 42 is inserted into can 44 and surrounded by flowable electrode material 46 which flows around and into the pores 48 of porous electrode 42.

A further alternative embodiment of the invention is shown in Figure 4. In accordance with this embodiment, an electrochemical cell 50 includes a three-dimensional tree-like structure 52 of a metal, such as a material known as "dendritic zinc", which resembles the veins of a leaf, and which is coated with a separator. The electrode 52 which has a separator coating 53 is immersed in a can 54 containing a slurry of cathode mix 56.

## Claims

1. A battery comprising :
a housing;
a first electrode disposed in the housing;
a coating which functions as a separator, the coating located on a surface of the first electrode; and
a flowable second electrode material, the flowable second electrode material disposed in the housing and surrounding the coated surface of the first electrode, **characterized in that** the separator coating has a thickness of less than 100 micrometres.

2. A battery according to claim 1, wherein the first electrode has a non-cylindrical shape.

3. A battery according to claim 2, wherein the first electrode has a non-symmetrical shape.

4. A battery according to claim 1, wherein the first electrode comprises a ribbon electrode.

5. A battery according to claim 4, wherein the ribbon electrode is spirally wound.

6. A battery according to claim 4, wherein the ribbon electrode is folded in a zigzag pattern.

7. A battery according to claim 4, wherein the ribbon electrode is comprised of a zinc foil.

8. A battery according to any preceding claim, in which the separator coating has a thickness of less than 60 micrometres, more preferably less than 40 micrometres, most preferably less than 30 micrometres.

9. A battery according to claim 1, wherein the first electrode is a porous metal electrode.

10. A battery according to claim 9, wherein the porous metal electrode is a metal foam.

11. A battery according to claim 9, wherein the porous metal electrode is a sintered metal.

12. A battery according to claim 9, wherein the porous metal electrode is comprised of zinc.

13. A battery according to claim 9, wherein the first electrode comprises a porous fixed network of an electrochemically active material.

14. A battery according to claim 9, wherein the first electrode comprises a porous fixed network of an electrically conductive material on which is deposited an electrochemically active material.

15. A battery according to claim 13 or claim 14, wherein the electrochemically active material is zinc.

16. A battery according to any preceding claim, wherein the second electrode material constitutes a positive electrode and the first electrode is a negative electrode.

17. A battery according to claim 16, wherein the second electrode material includes manganese dioxide.

18. A battery according to claim 16, wherein the first electrode includes zinc.

19. A battery according to claim 1, wherein one of the first electrode or second electrode material includes at least one electrochemically active material selected from the group consisting of lithium, nickel, metal hydride, cadmium, carbon, graphite, and lithiated manganese dioxide.

20. A method of making a battery comprising :
providing a housing;
providing a first electrode;
forming on a surface of the first electrode a coating which functions as a separator and which has a thickness of less than 100 micrometres;
disposing the coated first electrode in the housing; and
disposing a flowable material in the housing, the flowable material including a second electrode material, the flowable material surrounding the separator coated on the surface of the first electrode.

21. A method according to claim 20, wherein the first electrode comprises a ribbon electrode.

22. A method according to claim 21, wherein the ribbon electrode is spirally wound.

23. A method according to claim 21, wherein the ribbon electrode is folded in a zigzag pattern.

24. A method according to claim 21, wherein the ribbon electrode is comprised of a zinc foil.

25. A method according to claim 20, in which the separator coating has a thickness of less than 60 micrometres, more preferably less than 40 micrometres, most preferably less than 30 micrometres.

26. A method according to claim 20, in which the first electrode is disposed into the housing before the flowable material is disposed into the housing.

27. A method according to claim 20, in which the flowable material is disposed into the housing before the first electrode is disposed into the housing.

28. A method according to claim 20, wherein the first electrode is a porous metal electrode.

29. A method according to claim 28, wherein the porous metal electrode is a metal foam.

30. A method according to claim 28, wherein the porous metal electrode is a sintered metal.

31. A method according to claim 28, wherein the porous metal electrode is comprised of zinc.

## Patentansprüche

1. Batterie mit:
einem Gehäuse;
einer in dem Gehäuse angeordneten ersten Elektrode;
einer als Separator fungierenden Beschichtung auf einer Fläche der ersten Elektrode; und
einem in dem Gehäuse angeordneten und die beschichtete Fläche der ersten Elektrode umgebenden fließfähigen zweiten Elektrodenmaterial,
**dadurch gekennzeichnet, dass**
die Separatorbeschichtung eine Dicke von weniger als 100 Mikrometern aufweist.

2. Batterie nach Anspruch 1, bei der die erste Elektrode eine nicht zylindrische Form aufweist.

3. Batterie nach Anspruch 2, bei der die erste Elektrode eine nicht symmetrische Form aufweist.

4. Batterie nach Anspruch 1, bei der die erste Elektrode eine Bandelektrode aufweist.

5. Batterie nach Anspruch 4, bei der die Bandelektrode spiralförmig gewickelt ist.

6. Batterie nach Anspruch 4, bei der die Bandelektrode zickzackförmig gefaltet ist.

7. Batterie nach Anspruch 4, bei der die Bandelektrode aus einer Zinkfolie gebildet ist.

8. Batterie nach einem der vorhergehenden Ansprüche, bei der die Separatorbeschichtung eine Dicke von weniger als 60 Mikrometern, bei einer stärker bevorzugten Variante von weniger als 40 Mikrometern und bei der am stärksten bevorzugten Variante von weniger als 30 Mikrometern aufweist.

9. Batterie nach Anspruch 1, bei der die erste Elektrode eine Elektrode aus porösem Metall ist.

10. Batterie nach Anspruch 9, bei der die Elektrode aus porösem Metall aus Metallschaum gebildet ist.

11. Batterie nach Anspruch 9, bei der die Elektrode aus porösem Metall aus gesintertem Metall gebildet ist.

12. Batterie nach Anspruch 9, bei der die Elektrode aus porösem Metall aus Zink gebildet ist.

13. Batterie nach Anspruch 9, bei der die erste Elektrode ein poröses festes Netz aus elektrochemisch aktivem Material aufweist.

14. Batterie nach Anspruch 9, bei dem die erste Elektrode ein poröses festes Netz aus einem elektrisch leitenden Material aufweist, auf dem ein elektrochemisch aktives Material abgeschieden ist.

15. Batterie nach Anspruch 13 oder 14, bei dem das elektrochemisch aktive Material Zink ist.

16. Batterie nach einem der vorhergehenden Ansprüche, bei dem das zweite Elektrodenmaterial eine positive Elektrode bildet und die erste Elektrode eine negative Elektrode ist.

17. Batterie nach Anspruch 16, bei der das zweite Elektrodenmaterial Mangandioxid aufweist.

18. Batterie nach Anspruch 16, bei der die erste Elektrode Zink aufweist.

19. Batterie nach Anspruch 1, bei der die erste Elektrode oder das zweite Elektrodenmaterial mindestens ein elektrochemisch aktives Material aufweist, das aus der Gruppe bestehend aus Lithium, Nickel, Metallhydrid, Kadmium, Kohlenstoff, Graphit und mit Lithium verbundenem Mangandioxid ausgewählt ist.

20. Verfahren zum Herstellen einer Batterie, mit folgenden Schritten:
Bereitstellen eines Gehäuses;
Bereitstellen einer ersten Elektrode;
Ausbilden einer Beschichtung auf einer Fläche der ersten Elektrode, wobei die Beschichtung als Separator fungiert und eine Dicke von weniger als 100 Mikrometern aufweist;
Anordnen der beschichteten ersten Elektrode in dem Gehäuse; und
Anordnen eines fließfähigen Materials in dem Gehäuse, wobei das fließfähige Material ein zweites Elektrodenmaterial aufweist, das den auf die Fläche der ersten Elektrode aufgebrachten Separator umgibt.

21. Verfahren nach Anspruch 20, bei dem die erste Elektrode eine Bandelektrode aufweist.

22. Verfahren nach Anspruch 21, bei dem die Bandelektrode spiralförmig gewickelt ist.

23. Verfahren nach Anspruch 21, bei dem die Bandelektrode zickzackförmig gefaltet ist.

24. Verfahren nach Anspruch 21, bei dem die Bandelektrode aus einer Zinkfolie gebildet ist.

25. Verfahren nach Anspruch 20, bei dem die Separatorbeschichtung eine Dicke von weniger als 60 Mikrometern, bei einer stärker bevorzugten Variante von weniger als 40 Mikrometern und bei der am stärksten bevorzugten Variante von weniger als 30 Mikrometern aufweist.

26. Verfahren nach Anspruch 20, bei dem die erste Elektrode vor dem fließfähigen Material in dem Gehäuse angeordnet wird.

27. Verfahren nach Anspruch 20, bei dem das fließfähige Material vor der ersten Elektrode in dem Gehäuse angeordnet wird.

28. Verfahren nach Anspruch 20, bei dem die erste Elektrode eine Elektrode aus porösem Metall ist.

29. Verfahren nach Anspruch 28, bei dem die Elektrode aus porösem Metall aus Metallschaum gebildet ist.

30. Verfahren nach Anspruch 28, bei dem die Elektrode aus porösem Metall aus gesintertem Metall gebildet ist.

31. Verfahren nach Anspruch 28, bei dem die Elektrode aus porösem Metall aus Zink gebildet ist.

## Revendications

1. Pile comprenant :
un boîtier;
une première électrode placée dans le boîtier;
un revêtement qui fonctionne comme séparateur, le revêtement étant situé sur une surface de la première électrode; et
un matériau meuble formant une seconde électrode, le matériau meuble formant la seconde électrode étant placé dans le boîtier et entourant la surface revêtue de la première électrode, **caractérisée en ce que** le revêtement séparateur a une épaisseur de moins de 100 micromètres.

2. Pile selon la revendication 1, dans laquelle la première électrode a une forme non cylindrique.

3. Pile selon la revendication 2, dans laquelle la première électrode a une forme non symétrique.

4. Pile selon la revendication 1, dans laquelle la première électrode comprend une électrode en ruban.

5. Pile selon la revendication 4, dans laquelle l'électrode en ruban est enroulée en spirale.

6. Pile selon la revendication 4, dans laquelle l'électrode en ruban est repliée en zigzag.

7. Pile selon la revendication 4, dans laquelle l'électrode en ruban est constituée d'une feuille de zinc.

8. Pile selon l'une quelconque des revendications précédentes, dans laquelle le revêtement séparateur a une épaisseur de moins de 60 micromètres, de préférence de moins de 40 micromètres, mieux encore de moins de 30 micromètres.

9. Pile selon la revendication 1, dans laquelle la première électrode est une électrode en métal poreux.

10. Pile selon la revendication 9, dans laquelle l'électrode en métal poreux est une mousse métallique.

11. Pile selon la revendication 9, dans laquelle l'électrode en métal poreux est un métal fritté.

12. Pile selon la revendication 9, dans laquelle l'électrode en métal poreux est composée de zinc.

13. Pile selon la revendication 9, dans laquelle la première électrode comprend un réseau poreux fixe d'un matériau électrochimiquement actif.

14. Pilé selon la revendication 9, dans laquelle la première électrode comprend un réseau poreux fixe d'un matériau électroconducteur sur lequel est déposé un matériau électrochimiquement actif.

15. Pile selon la revendication 13 ou la revendication 14, dans laquelle le matériau électrochimiquement actif est le zinc.

16. Pile selon l'une quelconque des revendications précédentes, dans laquelle le matériau formant la seconde électrode constitue une électrode positive et la première électrode une électrode négative.

17. Pile selon la revendication 16, dans laquelle le matériau formant la seconde électrode comprend du dioxyde de manganèse.

18. Pile selon la revendication 16, dans laquelle la première électrode comprend du zinc.

19. Pile selon la revendication 1, dans laquelle l'un des matériaux de la première ou de la seconde électrode comprend au moins un matériau électrochimiquement actif choisi dans le groupe constitué du lithium, du nickel, d'un hydrure de métal, du cadmium, du carbone, du graphite et du dioxyde de manganèse lithié.

20. Procédé de fabrication d'une pile, comprenant :
la mise en oeuvre d'un boîtier;
la mise en oeuvre d'une première électrode;
la formation, sur une surface de la première électrode, d'un revêtement qui fonctionne comme séparateur et qui a une épaisseur de moins de 100 micromètres;
l'aménagement de la première électrode revêtue dans le boîtier; et
l'aménagement d'un matériau meuble dans le boîtier, le matériau meuble comprenant un matériau formant une seconde électrode, le matériau meuble entourant le séparateur appliqué sur la surface de la première électrode.

21. Procédé selon la revendication 20, dans lequel la première électrode comprend une électrode en ruban.

22. Procédé selon la revendication 21, dans lequel l'électrode en ruban est enroulée en spirale.

23. Procédé selon la revendication 21, dans lequel l'électrode en ruban est repliée en zigzag.

24. Procédé selon la revendication 21, dans lequel l'électrode en ruban est constituée d'une feuille de zinc.

25. Procédé selon la revendication 20, dans lequel le revêtement séparateur a une épaisseur de moins de 60 micromètres, de préférence de moins de 40 micromètres, mieux encore de moins de 30 micromètres.

26. Procédé selon la revendication 20, dans lequel la première électrode est placée dans le boîtier avant que le matériau meuble ne soit placé dans le boîtier.

27. Procédé selon la revendication 20, dans lequel le matériau meuble est placé dans le boîtier avant que la première électrode ne soit placée dans le boîtier.

28. Procédé selon la revendication 20, dans lequel la première électrode est une électrode en métal poreux.

29. Procédé selon la revendication 28, dans lequel l'électrode en métal poreux est une mousse métallique.

30. Procédé selon la revendication 28, dans lequel l'électrode en métal poreux est un métal fritté.

31. Procédé selon la revendication 28, dans lequel l'électrode en métal poreux est constituée de zinc.
